# EUROPEAN PATENT APPLICATION

(11) **EP 2 618 637 A1**
(43) Date of publication of application: **24.07.2013**
(21) Application number: 12191605.0
(22) Date of filing: 07.11.2012
(51) Int. Cl.: H05B 33/08

(54) **POWER SUPPLY CIRCUIT FOR DRIVING LIGHT EMITTING DIODE**

(30) Priority: 20.01.2012 TW 101102714
(71) Applicant: Phihong Technology Co., Ltd., Gueishan Township T'ao yuan 333 (TW)
(72) Inventor: Chen, Chun Chen, Taoyuan County (TW); Yeh, Chia Ying, Taoyuan County (TW); Chen, Chien Liang, Taoyuan County (TW); Yu, Po Ching, Taoyuan County (TW)
(74) Representative: Zaboliene, Reda

(57) **Abstract**

The present invention relates to a power supply circuit (100) for driving at least one light emitting diode (LED) (120). The power supply circuit (100) comprises: an input unit (107), an active power factor corrector (101), a converter (103), an output unit (109) and a feedback unit (105). The input unit (107) is utilized to receive power signal from a power source (110), and the output unit (109) is utilized to receive power transferred from the converter (103) for driving at least one LED (120). The feedback unit (105) couples to a node between the converter (103) and the output unit (109), and delivers the power signal, from the converter (103) to the output unit (109), back to the active power factor corrector (101). The active power factor corrector (101) monitors the power signal based on the power signal from the feedback unit (105) for stabilizing the outputting power from the output unit (109) and thereby driving the LED (120).

## Description

### BACKGROUND

### Field of Invention

The present invention relates to power supply circuits, more particularly, the present invention relates to a power supply circuit for driving light emitting diodes (LEDS), and the power supply circuit could apply high-effective and stabilized outputting voltages to at least one LED.

### Description of Related Art

With the increasing power requirement, a lot of scientists, engineers and manufacturers of power supply in every country all try to solve the problems about low-efficiency of power supplies.

In traditional, power factor corrector (PFC) is consisted of a ferrite core and a coil. The main functions of the PFC include modulating angle of phase, reducing virtual work, improving real power, decreasing interference of harmonic waves, and improving quality of applying voltages. In addition, main effects of the PFC is to enable the phase of voltage and the phase of current to be the same, and is to enable the load to be similar to the resistance. Thus, PFC is implemented into various circuit designs, and those circuit designs may be classified into two types, passive PFC and active PFC, based on the employed elements.

The active PFC may further be divided into two types, discontinuous conduction mode (DCM) and continuous conduction mode (CCM). Therefore, in practice, the main consideration facts to choose what kind of the active PFC are the performance (such as efficiency and density of power) and the cost of system. In general, a high-power system may be introduced in the CCM of the active PFC, and a low-power system may be introduced in the DCM of the active PFC.

In applications of industries, a boost-type converter with low power is always used in the DCM and a boost-type converter with high power is typical used in the CCM for operating to adjust the power factor. However, although the traditional boost-type converter has simple features and is easy for operation in the FPC, a serious harmonic wave of current is occurred due to the inputting current of inductance being a triangular wave pulse. Thus, for a traditional boost-type converter, if the setting value of a filter factor is larger, the power factor will become smaller due to the phase of the inputting current is lagged. In contrast, if the setting value of the filter factor is smaller, the noise of the inputting current will be more and it causes very serious electromagnetic waves interferences.

Furthermore, the alternating current sources are usually used for power supply circuits of light emitting diodes (LEDS), and the alternating current sources are operated based on switching conducting time of power semiconductor or modulation of frequency for converting the alternating current source to stabilize the direct voltage. However, any changes of the outputting load will cause the circuits failure to be operated in the optimized work. Thus, the average efficiency cannot be improved.

### SUMMARY

One object of the present invention is to solve the problem that the traditional power supply circuit of light emitting diode (LED) could not fix at the best work status during operation.

Another object of the present invention is to improve the efficiency of power supply circuits of LED effectively.

In order to reach the foregoing objects, the present invention provides a power supply circuit for driving LED, and the power supply circuit comprises: an input unit, an active power factor corrector, a converter, an output unit and a feedback unit. The input unit is utilized to receive power signal from a power supply and the output unit is utilized to receive power transferred from the converter for driving at least one LED. The feedback unit couples to a node between the converter and the output unit, and delivers the power signal, from the converter to the output unit, back to the active power factor corrector. The active power factor corrector may modulate the power signal based on the power signal from the feedback unit for stabilizing the outputting power from the output unit and thereby driving the LED.

In one embodiment of the present invention, the input unit is a rectifier/filter for rectifying and filtering the power signal from the power source.

Moreover, in one embodiment of the present invention, the converter is an isolated DC-DC converter. In this case, an operating frequency and a duty cycle of the isolated DC-DC converter are fixed for maintaining power loss at lowermost value.

Furthermore, in one embodiment of the present invention, the converter may comprise: a main winding and a secondary winding. In this case, the main winding is electrically coupled to the active power factor corrector, and the secondary winding is electrically coupled to the output unit.

In addition, in one embodiment of the present invention, the feedback unit is an optocoupler. In this case, the optocoupler is consisted of a LED and a phototransistor.

As mentioned-above, the operating frequency and the duty cycle of the converter (such as an isolated DC-DC converter) are fixed for maintaining the power loss at lowermost value during operation. Thus, the converter may provide a stabilized power signal (such as voltage), which is modulated by the active power factor corrector, to the output unit for applying the stabilizing power signal to at least one LED.

### BRIEF DESCRIPTION OF THE DRAWINGS

The present description will be better understood from the following detailed description read in light of the accompanying drawings, wherein:

FIG. 1 illustrates a schematic diagram illustrating an embodiment of a power supply circuit according to the present invention; and

FIG. 2 illustrates a schematic diagram illustrating an equivalent circuit of an embodiment of a power supply circuit according to the present invention.

### DETAILED DESCRIPTION

The following description includes discussion of figures having illustrations given by way of example of implementations of embodiments of the invention. The drawings should be understood by way of example, and not by way of limitation. As used herein, references to one or more "embodiments" are to be understood as describing a particular feature, structure, or characteristic included in at least one implementation of the invention. Thus, phrases such as "in one embodiment" or "in an alternate embodiment" appearing herein describe various embodiments and implementations of the invention, and do not necessarily all refer to the same embodiment. However, they are also not necessarily mutually exclusive.

Descriptions of certain details and implementations follow, including a description of the figures, which may depict some or all of the embodiments described below, as well as discussing other potential embodiments or implementations of the inventive concepts presented herein. An overview of embodiments of the invention is provided below, followed by a more detailed description with reference to the drawings.

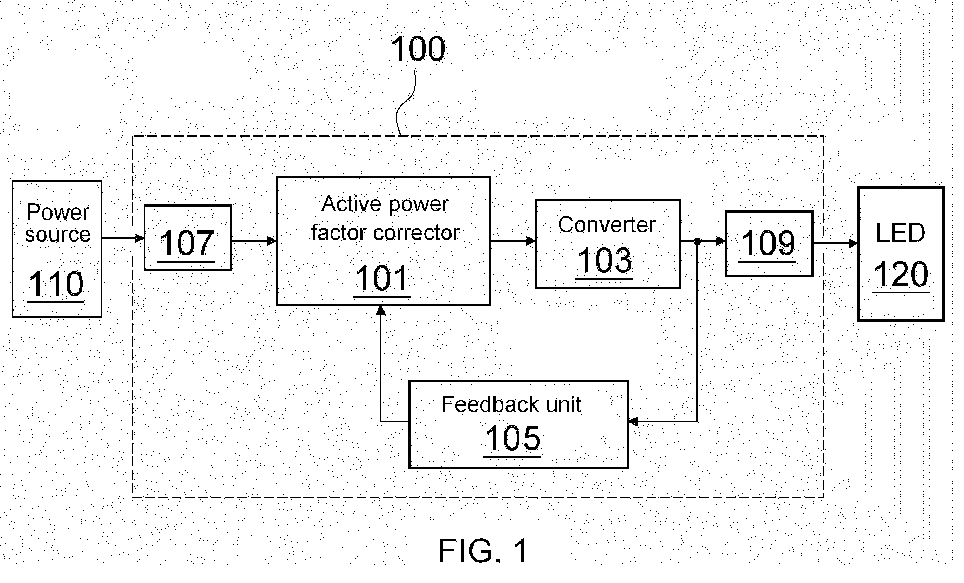

Referring to FIG. 1, it illustrates a schematic diagram illustrating an embodiment of a power supply circuit according to the present invention. In this embodiment, a power supply circuit 100 is electrically connected to a power source 110 for receiving a power signal (such as voltage) from the power source 110. Further, the power supply circuit 100 is electrically coupled to a light emitting diode (LED) 120 for applying power to the LED 120 and driving the LED 120. It's anticipated that the drawing only shows a single power source 110 and a single LED 120 for simplifying and clearing. However, in practice, the numbers of the power source 110 and the LED 120 may be added for different requirements, but should not be limited.

In one embodiment of the present invention, the power source 110 may, be based on different requirements, comprise alternating current (AC) provided from tie-grid or direct current (DC) provided from, fuel cells, lithium batteries, or renewable energy sources, but should not be limited.

Furthermore, the power supply circuit 100 comprises: an input unit 107, an active power factor corrector (PFC) 101, a converter 103, a feedback unit 105 and an output unit 109. In this case, the input unit 107 is electrically coupled to the power source 110 for receiving a power signal (such as voltage) from the power source 110. The active PFC 101 is electrically coupled to the input unit 107 for receiving the power signal from the input unit 107. The converter 103 is electrically coupled to the active PFC101 and the output unit 109. Moreover, one end of the feedback unit 105 is electrically coupled to the active PFC 101, and another end of the feedback unit 105 is electrically coupled to a node between the converter 103 and the output unit 109. Thus, the power signal, from the converter 103 to the output unit 109, may deliver back to the active PFC 101 for modulating or modifying the power value. Therefore, the output unit 109 may apply a stabilizing power value or signal to the LED 120 and thereby driving the LED 120 with stable power value.

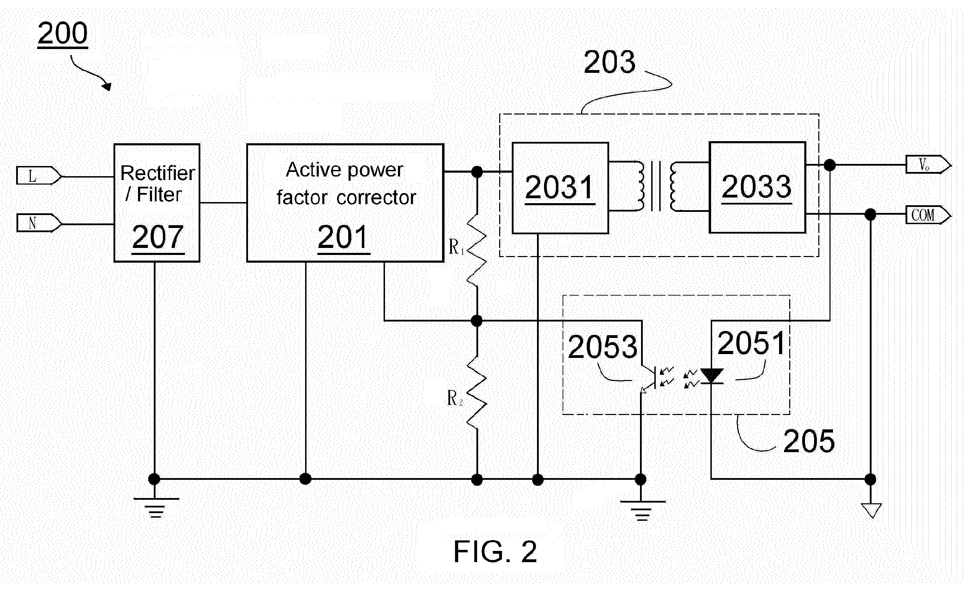

Subsequently, referring to FIG. 2, it illustrates a schematic diagram illustrating an equivalent circuit of an embodiment of a power supply circuit according to the present invention. In this embodiment shown in FIG. 2, a power supply circuit 200 may introduce with the schematic diagram of the power supply circuit 100 shown in FIG. 1 for clear and brief illustration.

In this embodiment, a rectifier/filter 207, as the input unit 107 shown in FIG. 1, is used. In this case, the symbol of input signal "L" means live wire and the symbol "N" means neutral wire. The rectifier/filter 207 is utilized to receive a power signal from the power source 110, and unnecessary noises of the power signal may be filtered by the rectifier/filter 207.

In certain embodiments of the present invention, the power source 110 provides AC voltage, and the rectifier/filter 207 may further be designed to have the capability of converting AC to DC. In another certain embodiments of the present invention, the power source 110 provides DC voltage, and the rectifier/filter 207 may also be designed with the capability to rectifying a DC voltage to fit the demanded value, as the DC voltage is not fulfilled the requirements of the power supply circuit.

After the power signal from the power source 110 passes through the rectifier/filter 207 for rectifying and filtering, the power signal will be delivered to the active PFC 201. In this embodiment, the active PFC 201 is implemented by an integrated circuit chip.

Furthermore, a converter 203 in the present embodiment, which is corresponding to the converter 103 shown in FIG. 1, is an isolated DC-DC converter. In this case, the isolated DC-DC converter 203 further comprises: a main winding 2031, electrically coupled to the active PFC 201; and a secondary winding 2033, electrically coupled to an output unit. In this embodiment, the output unit with an outputting voltage, which is referred to the output unit 103 shown in FIG. 1, is denoted by "Vo" and a common voltage indicated by "COM".

In certain embodiments of the present invention, the converter 103, 203 may be a boost-type converter; in another certain embodiments of the present invention, the converter 103, 203 may be a buck-type converter; and in other embodiments of the present invention, the converter 103, 203 may be a buck-boost converter. As mentioned-above, the types of the converter 103, 203 may be replaced based on the practical operation, but should not be limited.

The outputting voltage Vo from the isolated DC-DC converter 203 is transferred to an optocoupler 205 which is electrically coupled to a node. In this embodiment, the optocoupler 205 is referred to the feedback unit 105 as shown in FIG. 1. It's anticipated that the specified elements are used for describing, but not limited, in this embodiment. For a person skilled in the present art, he/she may use other elements with equivalent functions to replace the foregoing elements in the present embodiments based on requirements of practical operations. Thus, the scopes of the present invention should not be limited in these specific embodiments.

In this embodiment, the optocoupler 205 is also electrically coupled to the active PFC 201 for delivering the power signal of the outputting voltage Vo back to the active PFC 201. Otherwise, in this embodiment, the optocoupler 205 is further consisted of a LED 2051 and a phototransistor 2053. Thus, when an outputting voltage Vo is transferred to the LED 2051 of the optocoupler 205, the LED 2051 will be triggered to emit a light with a wavelength. Subsequently, the light is received by the phototransistor 2053 and generates a photocurrent. The photocurrent will then deliver back to the active PFC 201. It's anticipated that the different wavelength of light emitted from the LED 2051 should be selected and based on different requirements of practical operations. Moreover, in this embodiment, the phototransistor 2053 is used to act as a light detector of the optocoupler 205, however, in practice, any elements with similar and equivalent functions, such as photodiode, should replace the phototransistor 2053 in other embodiments. These should not be limited.

Furthermore, in this embodiment, in order to match the incoming voltage or current into the active PFC 201 and the isolated DC-DC converter 203 to the demanded requirements of those elements, resistors R₁ and R₂ are disposed between the active PFC 201, the isolated DC-DC converter 203 and the optocoupler 205. It's anticipated that the resistors are required or not that is based on the requirements of practical operations, and the resistance value of those resistors also may be monitored according to the practical operations. Thus, those features should not be used to restrict the scope of the present invention.

As mentioned-above, the power supply circuits 100, 200 of the present invention may fix the operating frequency and the duty cycle of the converter 103 (or isolated DC-DC converter 203) for maintaining the power loss at the lowermost value, and the feedback unit 105 (or optocoupler 205) delivers the power signal back to the active PFC 101, 201. Thus, the outputting voltage is modified by the active PFC 101, 201 for stabilizing the outputting voltages of the converter 103 (or isolated DC-DC converter 203), the stabilized current is subsequently delivered to the output unit 109 for applying a stabilized outputting voltage to the LED 120 and thereby driving the LED 120.

Subsequently, the present invention further comprises furhter embodied implementations based on the foregoing features of the power supply circuits 100, 200 shown in FIGS. 1 and 2, as shown following:

### First Embodiment

In this embodiment, referring to the schematic diagram of the equivalent circuit of the power supply circuit 200 shown in FIG.2, the ratio of the main winding 2031 and the secondary winding 2033 of the isolated DC-DC converter 203 is 39:15, and the inductance is 350µ H. In this embodiment, a buck-type active PFC 201 is used. In full-load operations, the efficiency may reach 90.24%. However, in this case, the stability of the power supply circuit in low-load operation is not as good as the one in high-load operation.

### Second Embodiment

In this embodiment, referring to the schematic diagram of the equivalent circuit of the power supply circuit 200 shown in FIG.2, the ratio of the main winding 2031 and the secondary winding 2033 of the isolated DC-DC converter 203 is 152:61, and the inductance is 2200µ H. In this embodiment, a buck-type active PFC 201 is introduced. In this case, in order to stabilize the outputting voltage Vo of the power supply circuit in a very low-load operation, the inductance and operating frequency are increased.

In this embodiment, the inductance of the isolated DC-DC converter 203 is increased in a permitting range. Therefore, the outputting voltage Vo may stably output in a very low-load operation, effectively. However, in this case, the isolated DC-DC converter 203 may reach saturation when the full-load operation is performed. Thus, the efficiency of the power supply circuit may be reduced slightly during in full-load operation.

Furthermore, in this embodiment, when the outputting load is 0.057 ampere (as a very low-load operation), the output voltage is stabilized effectively by the present invention. However, in this case, the efficiency in full-load operation is slightly reduced to around 78.72%.

### Third Embodiment

In this embodiment, referring to the schematic diagram of the equivalent circuit of the power supply circuit 200 shown in FIG.2, the ratio of the main winding 2031 and the secondary winding 2033 of the isolated DC-DC converter 203 is defined as 80:31, and the inductance is 1000µ H. In this embodiment, a buck-type active PFC 201 is used. In this case, the winding number of the main winding 2031 and inductance is reduced to half for improving the efficiency in the full-load operation. However, in this case, the output load need to be increased to 0.15 ampere to output the stable voltage by the outputting voltage Vo. Moreover, in this embodiment, the efficiency of the power supply circuit in full-load operation may reach around 87.36%.

As the foregoing embodiments, the buck-type active PFC 201 may reduce compressive stresses effectively for improving efficiency. Furthermore, the power supply circuit 200 may get into the CCM mode in advance by increasing the operating frequency or inductance of the isolated DC-DC converter 203. Thus, the outputting voltage may be generated with stable value during a very low load operation.

Therefore, the power supply circuit for driving LED according to the present invention is a high-efficiency power supply circuit. Particularly, the power signal of the outputting voltage is delivered back to the active PFC via the feedback unit (ex., optocoupler), and the active PFC may modify a voltage and deliver the modified voltage into the converter (ex., isolated DC-DC converter). Thus, the operating frequency and the duty cycle of the converter may apply a stabilizing voltage to drive the LED for improving the high efficiency of power without changing the operating frequency and the duty cycle of the converter.

It will be understood that the above descriptions of embodiments are given by way of example only and that various modifications may be made by those with ordinary skill in the art. The above specification, examples and data provide a complete description of the structure and use of exemplary embodiments of the invention. Although various embodiments of the invention have been described above with a certain degree of particularity, or with reference to one or more individual embodiments, those with ordinary skill in the art could make numerous alterations to the disclosed embodiments without departing from the spirit or scope of this invention.

## Claims

1. A power supply circuit (100) for driving light emitting diode (LED), comprising:
an input unit (107) for receiving power signal from a power source (110);
an active power factor corrector (101), electrically coupled to said input unit (107);
a converter (103), electrically coupled to said active power factor corrector (101);
an output unit (109), electrically coupled to said converter (103) to receive power transferred from said converter (103) for driving at least one LED (120); and
a feedback unit (105), electrically coupled to a node between said converter (103) and said output unit (109) for delivering the power signal, from said converter (103) to said output unit (109), back to said active power factor corrector (101) so that said active power factor corrector (101) modifies the power signal based on the power signal from the feedback unit (105) for stabilizing power outputted by said output unit (109).

2. The power supply circuit (100, 200) of the claim 1, wherein said input unit (107) is a rectifier/filter (207) for rectifying and filtering the power signal from the power source (110).

3. The power supply circuit (100, 200) of the claims 1, wherein said converter (103) is an isolated DC-DC converter (203).

4. The power supply circuit (200) of the claim 3, wherein an operating frequency and duty cycle of the isolated DC-DC converter (203) are fixed for maintaining power loss at lowermost value.

5. The power supply circuit (100, 200) of the claim 1, wherein said converter (103, 203) further comprises: a main winding (2031), electrically coupled to said active power factor corrector (101, 201); and a secondary winding (2033), electrically coupled to said output unit (109).

6. The power supply circuit of the claim 5, wherein a ratio of the main winding and the secondary winding is 39:15.

7. The power supply circuit (200) of the claim 5, wherein a ratio of the main winding (2031) and the secondary winding (2033) is 152:61.

8. The power supply circuit (200) of the claim 5, wherein a ratio of the main winding (2031) and the secondary winding (2033) is 80:31.

9. The power supply circuit (100, 200) of the claim 1, wherein said feedback unit (105) is an optocoupler (205).

10. The power supply circuit (200) of the claim 9, wherein the optocoupler (205) comprises a LED (2051) and a phototransistor (2053).
